# EUROPEAN PATENT SPECIFICATION

(11) **EP 4 557 706 B1**
(45) Date of publication and mention of the grant of the patent: **08.04.2026**
(21) Application number: 23839007.4
(22) Date of filing: 13.07.2023
(51) Int. Cl.: H04L 67/12, H04L 9/08, H04L 9/32

(54) **END-TO-END DATA TRANSMISSION METHOD, AND DEVICE AND MEDIUM**
END-TO-END-DATENÜBERTRAGUNGSVERFAHREN SOWIE VORRICHTUNG UND MEDIUM
PROCÉDÉ DE TRANSMISSION DE DONNÉES DE BOUT EN BOUT, DISPOSITIF ET SUPPORT

(30) Priority: 14.07.2022 CN 202210832976
(43) Date of publication of application: 21.05.2025
(73) Proprietor: Nio Technology (Anhui) Co., Ltd, Hefei City, Anhui 230601 (CN)
(72) Inventor: LU, Long, Shanghai 201804 (CN); SUN, Ying, Shanghai 201804 (CN); LI, Zhengyu, Shanghai 201804 (CN)
(74) Representative: Vossius & Partner Patentanwälte Rechtsanwälte mbB
(86) International application number: PCT/CN2023/107170
(87) International publication number: WO 2024/012517

(56) References cited:
- WO-A1-2021/159488
- CN-A- 103 281 191
- CN-A- 105 163 309
- CN-A- 107 181 770
- CN-A- 107 181 770
- CN-A- 109 041 205
- CN-A- 109 041 205
- CN-A- 111 917 538
- CN-A- 115 225 672
- US-A1- 2015 378 634
- US-A1- 2021 165 916

## Description

The application claims priority to Chinese Patent Application No. 202210832976.X, filed on July 14, 2022 and entitled "END-TO-END DATA TRANSMISSION METHOD AND DEVICE AND MEDIUM".

### Technical Field

The disclosure relates to the technical field of communication security, and in particular, provides an end-to-end data transmission method and device, and a medium.

### Background Art

With the development of intelligent connected vehicles, related security is grabbing more and more attention from users. In the industry of intelligent electric vehicles, one of the most important areas of security is data security, which is related to user privacy, property and even life safety. If such data were to be leaked, it could have a significant impact on the user privacy, property, and even the safety of users' lives.

Conventionally, during data transmission between a vehicle end and a mobile end, the vehicle end and the mobile end both usually employ the HKDF key derivation algorithm in conjunction with a seed key stored at both ends to derive a required key directly, and then, perform data decryption, signature authentication, etc. by using the derived key, to ensure data security. That is, the security of the seed key during sharing between the vehicle end and the mobile end has a direct impact on the data security. Therefore, how to ensure the security of the seed key is a technical problem that needs to be solved urgently by those skilled in the art.

International patent application publication document WO 2021/159488 Al discloses various methods enabling paging of a vehicle using a cellular vehicle-to-everything (C-V2X) message.

### Summary

In order to overcome the above defects, the disclosure herein provides a vehicle monitoring method and device, and a storage medium, to solve or at least partially solve the problem of low reliability of vehicle surveillance due to vehicle monitoring data leakage.

In order to overcome the above defects, the disclosure herein provides an end-to-end data transmission method and device, and a medium, to solve or at least partially solve the problem of low security of a seed key during sharing between a vehicle end and a mobile end.

In a first aspect, the disclosure provides an end-to-end data transmission method. The method is performed by a vehicle end, and the method includes:
generating a seed key, and signature information for the seed key;
concatenating the signature information, the seed key, and current timestamp information to obtain first concatenated information;
encrypting the first concatenated information based on a mobile end identifier provided by a user to obtain an encrypted seed key; and
generating an identification code corresponding to the encrypted seed key, such that the mobile end scans the identification code and then processes the encrypted seed key with the mobile end identifier to obtain the seed key.

In a second aspect, the disclosure provides an end-to-end data transmission method. The method is applied to a mobile end, and the method includes:
scanning an identification code that corresponds to an encrypted seed key and that is generated by a vehicle end to obtain the encrypted seed key;
processing the encrypted seed key with a mobile end identifier to obtain first concatenated information corresponding to the seed key;
extracting signature information and a seed key from the first concatenated information;
verifying the seed key based on a device identifier of the vehicle end, and the signature information; and
storing the seed key when the verification succeeds.

In a third aspect, the disclosure provides an end-to-end data transmission method. The method is performed by a data transmission system including a vehicle end and a mobile end, and the method includes:
generating, by the vehicle end, a seed key, and signature information for the seed key, and then concatenating the signature information, the seed key, and current timestamp information to obtain first concatenated information; encrypting the first concatenated information based on a mobile end identifier provided by a user to obtain an encrypted seed key; and generating an identification code corresponding to the encrypted seed key; and
scanning, by the mobile end, the identification code that corresponds to the encrypted seed key and that is generated by the vehicle end to obtain the encrypted seed key; processing the encrypted seed key with the mobile end identifier to obtain the first concatenated information corresponding to the seed key; extracting the signature information and the seed key from the first concatenated information; verifying the seed key based on a device identifier of the vehicle end, and the signature information; and storing the seed key when the verification succeeds.

In a fourth aspect, the disclosure provides an end-to-end data transmission device including a processor and a storage apparatus, wherein the storage apparatus is configured to store a plurality of pieces of program code, and the program code is configured to be loaded and run by the processor to perform the end-to-end data transmission method as described in any one of the above aspects.

According to a fifth aspect, there is provided a computer-readable storage medium storing a plurality of pieces of program code, wherein the program code is configured to be loaded and run by a processor to perform the end-to-end data transmission method as described in any one of the above aspects.

The one or more technical solutions of the disclosure described above have at least one or more of the following advantages.

In the technical solutions for implementing the disclosure, after the seed key, and the signature information for the seed key are generated, the signature information, the seed key, and the current timestamp information may be concatenated to obtain the first concatenated information; then, the first concatenated information is encrypted based on the mobile end identifier provided by the user to obtain the encrypted seed key; and further, the identification code corresponding to the encrypted seed key is generated. In this way, the seed key can be signed with the signature information, such that the seed key is prevented from being tampered with. In addition, the process of concatenating the signature information, the seed key, and the current timestamp information further prevents the seed key from tampering. Moreover, encryption of the first concatenated information with the mobile end identifier may prevent a third party from snooping the seed key and increases the difficulty in cracking the seed key, thereby further enhancing the security of the seed key.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar numbers in the figures are used to represent similar components, in which:
FIG. 1 is a schematic flowchart of main steps of an end-to-end data transmission method according to an embodiment of the disclosure;
FIG. 2 is a schematic flowchart of main steps of an end-to-end data transmission method according to another embodiment of the disclosure;
FIG. 3 is a block diagram of an end-to-end data transmission apparatus of a vehicle end according to an embodiment of the disclosure;
FIG. 4 is a block diagram of an end-to-end data transmission apparatus of a mobile end according to an embodiment of the disclosure; and
FIG. 5 is a block diagram illustrating the main structure of a key generation device according to an embodiment of the disclosure.

### Detailed Description of Embodiments

Some implementations of the disclosure are described below with reference to the accompanying drawings. Those skilled in the art should understand that these implementations are merely used to explain the technical details of the disclosure, and are not intended to limit the scope of protection of the disclosure.

In the description of the disclosure, a "module" or "processor" may include hardware, software, or a combination thereof. A module may include hardware circuit(s), various suitable sensors, communication port(s), memory(ies), software such as program code, or a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

In general, during data transmission between a vehicle end and a mobile end, the vehicle end and the mobile end both mostly employ an HKDF key derivation algorithm in conjunction with a seed key stored at both ends to derive a required key directly, and then, perform data decryption, signature authentication, etc. by using the derived key, to ensure data security. That is, the security of the seed key during sharing between the vehicle end and the mobile end has a direct impact on the data security. Therefore, to enhance the security of the seed key, the disclosure provides the following technical solutions.

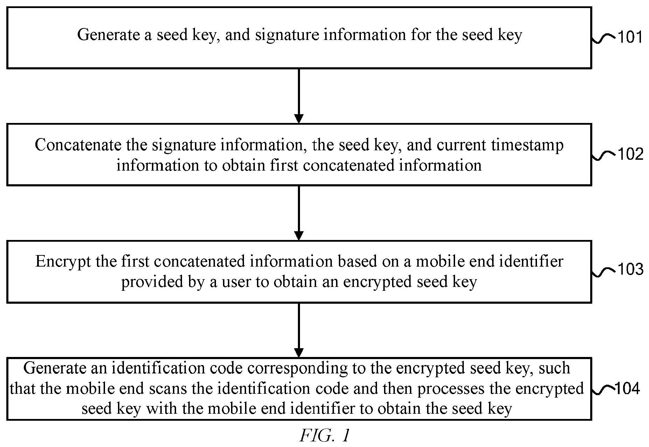

Referring to FIG. 1, FIG. 1 is a schematic flowchart of main steps of an end-to-end data transmission method according to an embodiment of the disclosure. This end-to-end data transmission method may be performed by a vehicle end. As shown in FIG. 1, the end-to-end data transmission method may include steps 101 to 104, which will be described in detail below.

Step 101: Generate a seed key, and signature information for the seed key.

In a specific implementation, generation of the seed key may include the following steps.
(1) Obtain a master key of a vehicle end, a device identifier of the vehicle end, predetermined context information, and random information.
   In a specific implementation, the master key of the vehicle end, the device identifier of the vehicle end, the predetermined context information, and the random information may be obtained. The master key of the vehicle end may be generated by a hardware security module of the vehicle end, and a life cycle of the master key of the vehicle end is the same as a life cycle of hardware of the vehicle end. That is, the master key of the vehicle end may be generated based on information related to the hardware of the vehicle end, and if the hardware of the vehicle end is replaced, the master key of the vehicle end needs to be regenerated.
(2) Generate the seed key based on the master key of the vehicle end, the device identifier of the vehicle end, the predetermined context information, and the random information by using a key derivation algorithm, and store the seed key.

Specifically, the master key of the vehicle end, the device identifier of the vehicle end, the predetermined context information, and the random information may be processed via the key derivation algorithm to derive the seed key, and the seed key is stored.

In a specific implementation, during generation of the signature information for the seed key, the device identifier of the vehicle end may be processed via the HMAC algorithm to obtain the signature information for the seed key, and the signature information is used to sign the seed key, to prevent the seed key from tampering.

Step 102: Concatenate the signature information, the seed key, and current timestamp information to obtain first concatenated information.

In a specific implementation, the signature information, the seed key, and the current timestamp information may be concatenated according to predetermined concatenation rule(s) to obtain the first concatenated information. The concatenation rule(s) may be set based on concatenation needs. For example, the signature information, the seed key, and the current timestamp information may be combined directly, or may be concatenated after the order of at least one of them is changed. Details will not be described by way of example herein.

Step 103: Encrypt the first concatenated information based on a mobile end identifier provided by a user to obtain an encrypted seed key.

In a specific implementation, to prevent a third party from snooping the seed key, the first concatenated information may be encrypted with the mobile end identifier provided by the user to obtain the encrypted seed key. In this way, only the mobile end performing data transmission with the vehicle end can decrypt the encrypted seed key due to the uniqueness of the mobile end identifier, thereby making it harder to decrypt the seed key and effectively preventing a third party from obtaining the seed key.

Step 104: Generate an identification code corresponding to the encrypted seed key, such that the mobile end scans the identification code and then processes the encrypted seed key with the mobile end identifier to obtain the seed key.

In a specific implementation, the identification code corresponding to the encrypted seed key may be generated, such that the mobile end scans the identification code and then processes the encrypted seed key with the mobile end identifier to obtain the seed key. The identification code may be, but is not limited to, a two-dimensional code, so that even if the two-dimensional code is unintentionally leaked, the encrypted seed key cannot be decrypted without the mobile end identifier.

Specifically, the mobile end may scan the identification code corresponding to the encrypted seed key generated by the vehicle end to obtain the encrypted seed key, process the encrypted seed key with the mobile end identifier to obtain the first concatenated information corresponding to the seed key, extract the signature information and the seed key from the first concatenated information, verify the seed key based on the device identifier of the vehicle end, and the signature information, and store the seed key when the verification succeeds.

In the end-to-end data transmission method according to the embodiment, after the seed key, and the signature information for the seed key are generated, the signature information, the seed key, and the current timestamp information may be concatenated to obtain the first concatenated information; then, the first concatenated information is encrypted based on the mobile end identifier provided by the user to obtain the encrypted seed key; and further, the identification code corresponding to the encrypted seed key is generated. In this way, the seed key can be signed with the signature information, such that the seed key is prevented from being tampered with. In addition, the process of concatenating the signature information, the seed key, and the current timestamp information further prevents the seed key from tampering. Moreover, encryption of the first concatenated information with the mobile end identifier may prevent a third party from snooping the seed key and increases the difficulty in cracking the seed key, thereby further enhancing the security of the seed key.

In a specific implementation, during a session between the vehicle end and the mobile end, the generated seed key may be used to derive a required target derived key, and session data is processed with the target derived key to obtain target data, which is then responded to, or sent to the mobile terminal.

Specifically, during the session between the vehicle end and the mobile end, the following steps may be performed.

(11) Obtain at least one piece of label information corresponding to the session data.

In a specific implementation, after the session data between the vehicle end and the mobile end is obtained, the at least one piece of label information corresponding to the session data may be further extracted. The at least one piece of label information may include information such as timestamp information, random information, predefined information, etc. of the session data. The session data needs to be encrypted, while the at least one piece of label information corresponding to the session data is transmitted in plaintext.

(12) Generate a derived key of a predetermined length based on the at least one piece of label information and the seed key by using a key derivation algorithm;
In a specific implementation, there is one piece of label information, and generation of the derived key of a present length may refer to the following steps:
a1: Hash the label information to obtain a first hash value, and truncate the first hash value to obtain a truncated first hash value.

In some aspects, the label information may be hashed by using the key derivation algorithm to obtain a first hash value, which is then truncated according to predetermined truncation rule(s) to obtain a truncated first hash value. The predetermined truncation rule(s) may be selected based on truncation needs, and is not specifically limited in this embodiment.

b1: Generate the derived key of the predetermined length based on the seed key and the truncated first hash value by using the key derivation algorithm.

The seed key and the truncated first hash value may be processed via the HKDF key derivation algorithm to obtain the derived key of the predetermined length.

In another specific implementation, there are two pieces of label information, and generation of the first derived key of the present length may refer to the following steps:
a2: Concatenate all the pieces of label information to obtain the first concatenated information.

In a specific implementation, all the pieces of label information may be concatenated to obtain first concatenated information. For example, all the pieces of label information may include timestamp information "10101100," random information "10001001," and predefined information "11001011," which may be concatenated to obtain first concatenated information "10101100 10001001 11001011."

b2: Hash the first concatenated information to obtain a second hash value, and truncate the second hash value to obtain a truncated second hash value.

After the first concatenated information is obtained, the first concatenated information is hashed to obtain the second hash value, which is then truncated according to predetermined truncation rule(s), so as to obtain the truncated second hash value. The predetermined truncation rule(s) may be selected based on truncation needs, and is not specifically limited in this embodiment.

c2: Generate the derived key of the predetermined length based on the seed key and the truncated second hash value by using the key derivation algorithm.

The seed key and the truncated second hash value may be processed via the HKDF key derivation algorithm to obtain the derived key of the predetermined length.

(13) Extract the target derived key corresponding to the session data from the derived key of the predetermined length.

In a specific implementation, after the derived key of the predetermined length is obtained, the target derived key corresponding to the session data may be extracted from the derived key of the predetermined length according to predetermined extraction rule(s), to further increase the difficulty in cracking the key.

In a specific implementation, the target derived key may include a one-time encryption key and a one-time authentication key. The one-time encryption key is used to encrypt or decrypt the session data, and the one-time authentication key is used to sign or verify the session data. The predetermined extraction rule(s) may be customized. For example, in a case that the key derived by using the HKDF key derivation algorithm has a length of 512 bytes, and the one-time encryption key and the one-time authentication key both have a length of 256 bytes, an extraction rule that can be defined is cutting the key in halves: a first half may be the one-time encryption key, and a second half may be the one-time authentication key. Alternatively, other extraction rules may be used; for example, data of 256 bytes is extracted from the data of 512 bytes to form the one-time encryption key, and data of the remaining bytes of are sequentially concatenated to form the one-time authentication key. Details will not be described by way of example in this embodiment. In this way, the target derived key corresponding to the session data is extracted from the derived key of the predetermined length, so that even if the label information corresponding to the session data, and the seed key are leaked, the key can still be effectively prevented from being cracked.

(14) Process the session data with the target derived key to obtain the target data;
(15) Respond to the target data, or send the target data to the mobile terminal.

In a specific implementation, the target derived key may include a one-time encryption key and/or a one-time authentication key. If the session data is initiated by the vehicle end, after obtaining the one-time encryption key, the vehicle end may encrypt the session data with the one-time encryption key, and send the encrypted session data as the target data to the mobile end. After obtaining the one-time encryption key, the mobile end may decrypt the encrypted session data with the one-time encryption key to obtain the session data. Alternatively, after obtaining the one-time authentication key, the vehicle end may sign the session data with the one-time authentication key to obtain signed data as the target data, and send the signed data to the mobile end. After obtaining the one-time authentication key, the mobile end may verify the signed session data with the one-time authentication key to obtain the session data.

If the session data is initiated by the mobile end, after obtaining the one-time encryption key, the vehicle end may decrypt the encrypted session data sent by the vehicle end with the one-time encryption key to obtain the session data as the target data, and respond to the session data. Alternatively, after obtaining the one-time authentication key, the vehicle end may verify the signed session data sent by the vehicle end with the one-time authentication key to obtain the session data as the target data, and respond to the session data.

In the end-to-end data transmission method according to this embodiment, during the session with the mobile end, the at least one piece of label information corresponding to the session data is obtained; the derived key of the predetermined length is generated based on the at least one piece of label information and the seed key by using the key derivation algorithm; the target derived key corresponding to the session data is extracted from the derived key of the predetermined length; the session data is processed with the target derived key to obtain the target data; the target data is responded to or sent to the mobile terminal. In this way, the target derived key is further derived and extracted on the basis of the derived key of the predetermined length generated by the key derivation algorithm, so that even if the label information corresponding to the session data and the seed key are leaked, the key can still be effectively prevented from being cracked, thus enhancing the security during data transmission.

In a specific implementation, when the target derived key includes a one-time encryption key for symmetric encryption, in order to further enhance the security of data encryption, the one-time encryption key may also be used in conjunction with a one-time initialization vector during encryption, so as to perform salted encryption on the session data, thereby enhancing the security of encryption. The one-time initialization vector may be generated with reference to the following steps:
(21) Encrypt the at least one piece of label information to obtain a first encrypted ciphertext.

In a specific implementation, the label information may be timestamp information. As such, the label information may be encrypted by using HmacSha1 algorithm, such that the first encrypted ciphertext is returned.

(22) Extract first target information from the first encrypted ciphertext.

In a specific implementation, the first target information may be extracted from the first encrypted ciphertext according to customized extraction rule(s).

(23) Encrypt the first target information to obtain a second encrypted ciphertext.

The extracted first target information may be further encrypted by Sha256 algorithm, such that the second encrypted ciphertext is returned.

(24) Extract second target information from the second encrypted ciphertext, and the extracted target information is the one-time initialization vector.

The second target information may be extracted from the second encrypted ciphertext according to customized extraction rule(s).

In this way, obtaining the second target information as the one-time initialization vector by performing two extractions according to customized extraction rules when generating the one-time initialization vector allows increased difficulty in cracking the one-time initialization vector, thereby further enhancing data security.

It should be noted that, although the steps are described in a particular ordering of steps in the above embodiments, those skilled in the art may understand that the ordering of many of the described steps may be changed, such as steps may be performed simultaneously (in parallel) or in another order, without affecting the scope or operation of the disclosure.

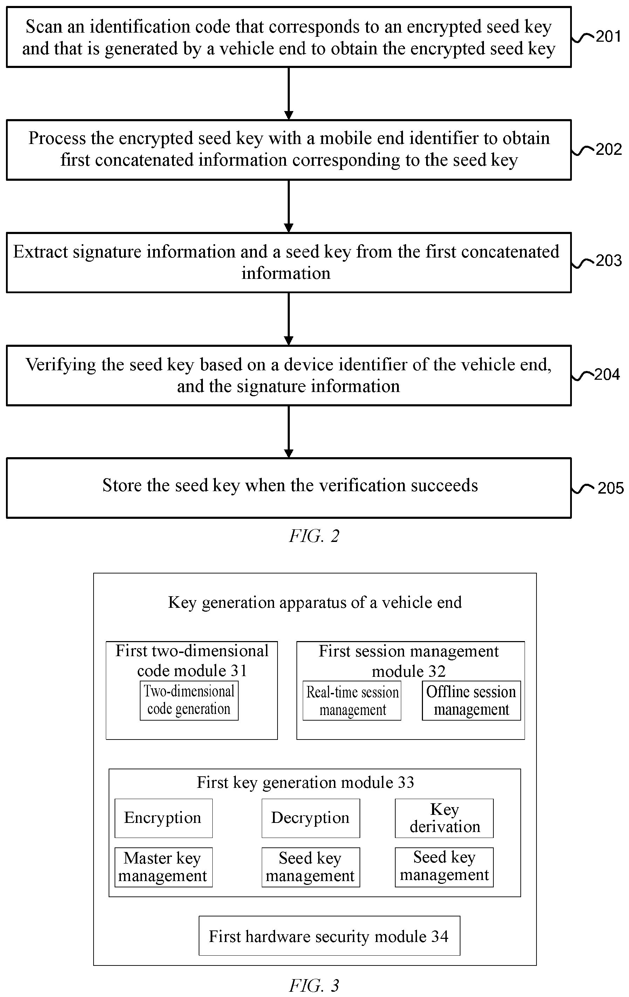

Referring to FIG. 2, FIG. 2 is a schematic flowchart of main steps of an end-to-end data transmission method according to another embodiment of the disclosure. This end-to-end data transmission method can be performed by a mobile end. As shown in FIG. 2, the end-to-end data transmission method in this embodiment of the disclosure mainly includes step 201 to step 205 below.

Step 201: Scan an identification code that corresponds to an encrypted seed key and that is generated by a vehicle end to obtain the encrypted seed key.

Step 202: Process the encrypted seed key with a mobile end identifier to obtain first concatenated information corresponding to a seed key.

Step 203: Extract signature information and a seed key from the first concatenated information.

Step 204: Verifying the seed key based on a device identifier of the vehicle end, and the signature information.

Step 205: Store the seed key when the verification succeeds.

In a specific implementation, during a session between the mobile end and the vehicle end, the generated seed key may be used to derive a required target derived key, and session data is processed with the target derived key to obtain target data, which is then responded to, or sent to the mobile terminal.

Specifically, during the session between the mobile end and the vehicle end, the above process including steps (11) to (15) and steps (21) to (24) may be performed as well. For details, reference may be made to the above related descriptions, and the details are not described again herein.

In a specific implementation, the disclosure further provides an end-to-end data transmission method. This end-to-end data transmission method can be performed by a data transmission system including a vehicle end and a mobile end. The method includes:
the vehicle end generating a seed key, and signature information for the seed key, and then concatenating the signature information, the seed key, and current timestamp information to obtain first concatenated information; encrypting the first concatenated information based on a mobile end identifier provided by a user to obtain an encrypted seed key; and generating an identification code corresponding to the encrypted seed key;
the mobile end scanning the identification code that corresponds to the encrypted seed key and that is generated by the vehicle end to obtain the encrypted seed key; processing the encrypted seed key with the mobile end identifier to obtain the first concatenated information corresponding to the seed key; extracting the signature information and the seed key from the first concatenated information; verifying the seed key based on a device identifier of the vehicle end, and the signature information; and storing the seed key when the verification succeeds.

FIG. 3 is an example block diagram of an end-to-end data transmission apparatus of a vehicle end. As shown in FIG. 3, a key generation apparatus of the vehicle end may include a first two-dimensional code module 31, a first session management module 32, a first key generation module 33, and a first hardware security module 34.

The first two-dimensional code module 31 is configured to generate a two-dimensional code corresponding to encrypted seed key information, for a scan by the mobile end.

The first session management module 32 provides session management for both offline session and real-time session. The session management is mainly used to generate and manage session content and label information of the session content, where the label information may be exposed in a network in plaintext.

The first key generation module 33 provides the following functions: encryption, decryption, key derivation, master key management, seed key management, session key management, etc. Details on different implementations can be referred to related descriptions of the above end-to-end data transmission methods, and details are not described again herein.

The first hardware security module 34 is an abstraction layer of an underlying hardware security module (HSM) of the vehicle end, which provides key generation and management, and data decryption functions.

A specific implementation where the end-to-end data transmission method is performed by a mobile end, and a seed key is obtained by the mobile end scanning a two-dimensional code of a vehicle end will be described in detail below.

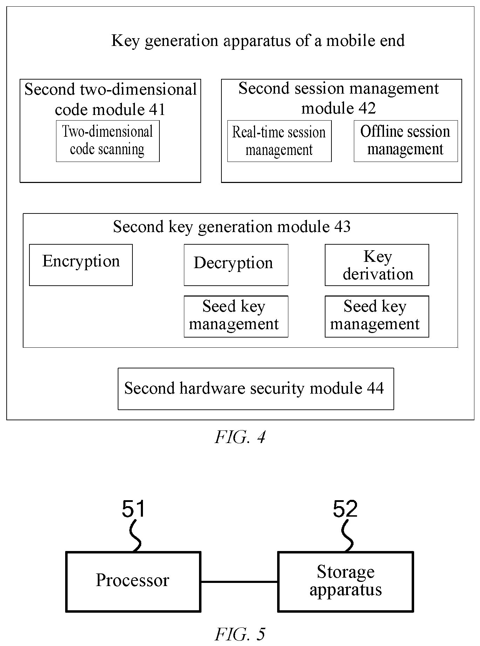

FIG. 4 is an example block diagram of an end-to-end data transmission apparatus of the mobile end. As shown in FIG. 4, a key generation apparatus of the mobile end may include a second two-dimensional code module 41, a second session management module 42, a second key generation module 43, and a second hardware security module 44.

The second two-dimensional code module 41 is configured to scan the two-dimensional code on the vehicle end to obtain encrypted seed key.

The second session management module 42 provides session management for both offline session and real-time session. The session management is mainly used to generate and manage session content and label information of the session content, where the label information may be exposed in a network in plaintext.

The second key generation module 43 provides the following functions: encryption, decryption, key derivation, seed key management, session key management, etc. Details on different implementations can be referred to related descriptions of the above end-to-end data transmission methods, and details are not described again herein.

The second hardware security module 44 is an abstraction layer of an underlying hardware security module (HSM) of the vehicle end, which provides key generation and management, and data decryption functions.

It should be noted that in practice, the seed key may alternatively be generated by the mobile end, and the vehicle end performs a scan to obtain the seed key, which is not specifically limited in this embodiment.

Those skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a key generation device.

Referring to FIG. 5, FIG. 5 is a block diagram illustrating the main structure of a key generation device according to an embodiment of the disclosure. As shown in FIG. 5, the key generation device in the embodiment of the disclosure may include a processor 51 and a storage apparatus 52. The storage apparatus 52 is configured to store a plurality of pieces of program code, and the program code is configured to be loaded and run by the processor 51 to perform any one of the end-to-end data transmission methods as described above.

For ease of description, only modules or details related to the embodiments of the disclosure are shown. Modules or details that are not disclosed can be referred to the descriptions on the data transmission methods provided herein. In various aspects, the key generation device may be a control device including various component electronic devices.

Further, the disclosure further provides a computer-readable storage medium. In an embodiment of the computer-readable storage medium according to the disclosure, the computer-readable storage medium may be configured to store instructions, wherein the instructions, when executed by a processor, cause the processor to perform any one of the end-to-end data transmission methods as described above. For ease of description, only modules or details related to the embodiments of the disclosure are shown. Modules or details that are not disclosed can be referred to the descriptions on the data transmission methods provided herein. The computer-readable storage medium may be a storage apparatus device including various component electronic devices. Optionally, the computer-readable storage medium in this embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules made thereto does not depart from the scope of the disclosure and therefore shall all fall within the scope of protection of the disclosure**,** which is defined by the appended claims.

Heretofore, the disclosure has been described with reference to the preferred implementations shown in the accompanying drawings. However, those skilled in the art can readily understand that the scope of protection of the disclosure is apparently not limited to these specific implementations. Without departing from the scope of the disclosure, those skilled in the art may make equivalent changes or replacements to related technical features. Modifications and variations obtained after these changes or replacements fall within the scope of protection of the disclosure.

## Claims

1. An end-to-end data transmission method, performed by a vehicle end, and comprising :
generating (101) a seed key, and signature information for the seed key;
concatenating (102) the signature information, the seed key, and current timestamp information to obtain first concatenated information;
encrypting (103) the first concatenated information based on a mobile end identifier provided by a user to obtain an encrypted seed key; and
generating (104) an identification code corresponding to the encrypted seed key such that a mobile end scans the identification code and then processes the encrypted seed key with the mobile end identifier to obtain the seed key.

2. The end-to-end data transmission method according to claim 1, **characterized in that** the generating a seed key, and signature information for the seed key comprises:
generating the seed key based on a master key of the vehicle end, a device identifier of the vehicle end, predetermined context information, and random information by using a key derivation algorithm; and generating the signature information based on the device identifier of the vehicle end.

3. The end-to-end data transmission method according to claim 1, **characterized in that** after the generating a seed key, and signature information for the seed key, the method further comprises:
during a session with the mobile terminal, obtaining at least one piece of tag information corresponding to session data;
generating a derived key of a predetermined length based on the at least one piece of label information and the seed key by using a key derivation algorithm;
extracting a target derived key corresponding to the session data from the derived key of the predetermined length;
processing the session data with the target derived key to obtain target data;
and
responding to the target data, or sending the target data to the mobile terminal.

4. The end-to-end data transmission method according to claim 3, **characterized in that** the target derived key comprises a one-time encryption key for symmetric encryption, and the method further comprises:
encrypting the at least one piece of label information to obtain a first encrypted ciphertext;
extracting first target information from the first encrypted ciphertext;
encrypting the first target information to obtain a second encrypted ciphertext;
and
extracting second target information from the second encrypted ciphertext as a one-time initialization vector, wherein the one-time initialization vector and the one-time encryption key are jointly used to perform symmetric encryption or decryption on the session data.

5. The end-to-end data transmission method according to claim 3, **characterized in that** the generating a derived key of a predetermined length based on the at least one piece of label information and the pre-stored seed key by using a key derivation algorithm comprises:
if there is one piece of label information, hashing the label information to obtain a first hash value, and truncating the first hash value to obtain a truncated first hash value; and generating the derived key of the predetermined length based on the seed key and the truncated first hash value by using the key derivation algorithm; or
if there are at least two pieces of label information, concatenating all the pieces of label information to obtain second concatenated information, hashing the second concatenated information to obtain a second hash value, and truncating the second hash value to obtain a truncated second hash value; and generating the derived key of the predetermined length based on the seed key and the truncated second hash value by using the key derivation algorithm.

6. The end-to-end data transmission method according to claim **1, characterized in that** the target derived key further comprises a one-time authentication key; and
the one-time authentication key is used to sign or verify the data to be processed.

7. An end-to-end data transmission method, **characterized in that** the method is performed by a mobile end, and the method comprises:
scanning an identification code that corresponds to an encrypted seed key and that is generated by a vehicle end to obtain the encrypted seed key;
processing the encrypted seed key with a mobile end identifier to obtain first concatenated information corresponding to the seed key;
extracting signature information and a seed key from the first concatenated information;
verifying the seed key based on a device identifier of the vehicle end, and the signature information; and
storing the seed key when the verification succeeds.

8. The end-to-end data transmission method according to claim 7, **characterized in that** the method further comprises:
during a session with the vehicle end, obtaining at least one piece of label information corresponding to session data;
generating a derived key of a predetermined length based on the at least one piece of label information and the seed key by using a key derivation algorithm;
extracting a target derived key corresponding to the session data from the derived key of the predetermined length;
processing the session data with the target derived key to obtain target data;
and
responding to the target data, or sending the target data to the vehicle end.

9. The end-to-end data transmission method according to claim 8, **characterized in that** the target derived key comprises a one-time encryption key for symmetric encryption, and the method further comprises:
encrypting the at least one piece of label information to obtain a first encrypted ciphertext;
extracting first target information from the first encrypted ciphertext;
encrypting the first target information to obtain a second encrypted ciphertext;
and
extracting second target information from the second encrypted ciphertext as a one-time initialization vector, wherein the one-time initialization vector and the one-time encryption key are jointly used to perform symmetric encryption or decryption on the session data.

10. The end-to-end data transmission method according to claim 8, **characterized in that** the generating a derived key of a predetermined length based on the at least one piece of label information and the pre-stored seed key by using a key derivation algorithm comprises:
if there is one piece of label information, hashing the label information to obtain a first hash value, and truncating the first hash value to obtain a truncated first hash value; and generating the derived key of the predetermined length based on the seed key and the truncated first hash value by using the key derivation algorithm; or
if there are at least two pieces of label information, concatenating all the pieces of label information to obtain second concatenated information, hashing the second concatenated information to obtain a second hash value, and truncating the second hash value to obtain a truncated second hash value; and generating the derived key of the predetermined length based on the seed key and the truncated second hash value by using the key derivation algorithm.

11. An end-to-end data transmission method, **characterized in that** the method is performed by a data transmission system comprising a vehicle end and a mobile end, and the method comprises:
generating, by the vehicle end, a seed key, and signature information for the seed key, and then concatenating the signature information, the seed key, and current timestamp information to obtain first concatenated information; encrypting the first concatenated information based on a mobile end identifier provided by a user to obtain an encrypted seed key; and generating an identification code corresponding to the encrypted seed key; and
scanning, by the mobile end, the identification code that corresponds to the encrypted seed key and that is generated by the vehicle end to obtain the encrypted seed key; processing the encrypted seed key with the mobile end identifier to obtain the first concatenated information corresponding to the seed key; extracting the signature information and the seed key from the first concatenated information; verifying the seed key based on a device identifier of the vehicle end, and the signature information; and storing the seed key when the verification succeeds.

12. An end-to-end data transmission device, comprising a processor and a storage apparatus configured to store a plurality of pieces of program code, **characterized in that** the program code is configured to be loaded and run by the processor to perform the end-to-end data transmission method according to any one of claims 1 to 11.

13. A computer-readable storage medium storing a plurality of pieces of program code, **characterized in that** the program code is configured to be loaded and run by a processor to perform the end-to-end data transmission method according to any one of claims 1 to 11.

## Patentansprüche

1. Ende-zu-Ende-Datenübertragungsverfahren, durchgeführt durch ein Fahrzeugende und Folgendes umfassend:
Erzeugen (101) eines Seed-Schlüssels und von Signaturinformationen für den Seed-Schlüssel;
Verketten (102) der Signaturinformationen, des Seed-Schlüssels und aktueller Zeitstempelinformationen zum Erhalten von ersten verketteten Informationen;
Verschlüsseln (103) der ersten verketteten Informationen basierend auf einer durch einen Benutzer bereitgestellten mobilen Endkennung zum Erhalten eines verschlüsselten Seed-Schlüssels; und
Erzeugen (104) eines Identifizierungscodes entsprechend dem verschlüsselten Seed-Schlüssel, sodass ein mobiles Ende den Identifizierungscode abtastet und dann den verschlüsselten Seed-Schlüssel mit der mobilen Endkennung verarbeitet, um den Seed-Schlüssel zu erhalten.

2. Ende-zu-Ende-Datenübertragungsverfahren nach Anspruch 1, **dadurch gekennzeichnet, dass** das Erzeugen eines Seed-Schlüssels und von Signaturinformationen für den Seed-Schlüssel Folgendes umfasst:
Erzeugen des Seed-Schlüssels basierend auf dem Master-Schlüssel des Fahrzeugendes, einer Vorrichtungskennung des Fahrzeugendes, vorbestimmten Kontextinformationen und zufälligen Informationen unter Verwendung eines Schlüsselableitungsalgorithmus; und Erzeugen der Signaturinformationen basierend auf der Vorrichtungskennung des Fahrzeugendes.

3. Ende-zu-Ende-Datenübertragungsverfahren nach Anspruch 1, **dadurch gekennzeichnet, dass** nach dem Erzeugen eines Seed-Schlüssels und von Signaturinformationen für den Seed-Schlüssel das Verfahren ferner Folgendes umfasst:
während einer Sitzung mit dem mobilen Endgerät, Erhalten zumindest eines Stückes von Kennzeicheninformationen entsprechend den Sitzungsdaten;
Erzeugen eines abgeleiteten Schlüssels einer vorbestimmten Länge basierend auf dem zumindest einen Stück von Kennzeicheninformationen und dem Seed-Schlüssel unter Verwendung eines Schlüsselableitungsalgorithmus;
Extrahieren eines abgeleiteten Zielschlüssels entsprechend den Sitzungsdaten aus dem abgeleiteten Schlüssel der vorbestimmten Länge;
Verarbeiten der Sitzungsdaten mit dem abgeleiteten Zielschlüssel zum Erhalten von Zieldaten; und
Antworten auf die Zieldaten oder Senden der Zieldaten an das mobile Endgerät.

4. Ende-zu-Ende-Datenübertragungsverfahren nach Anspruch 3, **dadurch gekennzeichnet, dass** der abgeleitete Zielschlüssel einen einmaligen Verschlüsselungsschlüssel für symmetrische Verschlüsselung umfasst und wobei das Verfahren ferner Folgendes umfasst:
Verschlüsseln des zumindest einen Stückes von Kennzeicheninformationen zum Erhalten eines ersten verschlüsselten Chiffretexts;
Extrahieren von ersten Zielinformationen aus dem ersten verschlüsselten Chiffretext;
Verschlüsseln der ersten Zielinformationen zum Erhalten eines zweiten verschlüsselten Chiffretexts; und
Extrahieren von zweiten Zielinformationen aus dem zweiten verschlüsselten Chiffretext als einen einmaligen Initialisierungsvektor, wobei der einmalige Initialisierungsvektor und der einmalige Verschlüsselungsschlüssel gemeinsam verwendet werden, um symmetrische Entschlüsselung oder Verschlüsselung auf den Sitzungsdaten durchzuführen.

5. Ende-zu-Ende-Datenübertragungsverfahren nach Anspruch 3, **dadurch gekennzeichnet, dass** das Erzeugen eines abgeleiteten Schlüssels einer vorbestimmten Länge basierend auf dem zumindest einen Stück von Kennzeicheninformationen und dem vorab gespeicherten Seed-Schlüssel unter Verwendung eines Schlüsselableitungsalgorithmus Folgendes umfasst:
wenn es ein Stück von Kennzeicheninformationen gibt, Hashing der Kennzeicheninformationen zum Erhalten eines ersten Hash-Wertes, und Abschneiden des ersten Hash-Wertes zum Erhalten eines abgeschnittenen ersten Hash-Wertes; und Erzeugen des abgeleiteten Schlüssels der vorbestimmten Länge basierend auf dem Seed-Schlüssel und dem abgeschnittenen ersten Hash-Wert unter Verwendung des Schlüsselableitungsalgorithmus; oder
wenn es mindestens zwei Stücke von Kennzeicheninformationen gibt, Verketten aller Stücke von Kennzeicheninformationen zum Erhalten von zweiten verketteten Informationen, Hashing der zweiten verketteten Informationen zum Erhalten eines zweiten Hash-Wertes, und Abschneiden des zweiten Hash-Wertes zum Erhalten eines abgeschnittenen zweiten Hash-Wertes; und
Erzeugen des abgeleiteten Schlüssels der vorbestimmten Länge basierend auf dem Seed-Schlüssel und dem abgeschnittenen zweiten Hash-Wert unter Verwendung des Schlüsselableitungsalgorithmus.

6. Ende-zu-Ende-Datenübertragungsverfahren nach Anspruch 1, **dadurch gekennzeichnet, dass** der abgeleitete Zielschlüssel ferner einen einmaligen Authentifizierungsschlüssel umfasst; und dass der einmalige Authentifizierungsschlüssel verwendet wird, um die zu verarbeitenden Daten zu signieren oder zu verifizieren.

7. Ende-zu-Ende-Datenübertragungsverfahren, **dadurch gekennzeichnet, dass** das Verfahren durch ein mobiles Ende durchgeführt wird und dass das Verfahren Folgendes umfasst:
Abtasten eines Identifizierungscodes, der einem verschlüsselten Seed-Schlüssel entspricht und der durch ein Fahrzeugende erzeugt wird, um den verschlüsselten Seed-Schlüssel zu erhalten;
Verarbeiten des verschlüsselten Seed-Schlüssels mit einer mobilen Endkennung zum Erhalten von ersten verketteten Informationen entsprechend dem Seed-Schlüssel;
Extrahieren von Signaturinformationen und einem Seed-Schlüssel aus den ersten verketteten Informationen;
Verifizieren des Seed-Schlüssels basierend auf einer Vorrichtungskennung des Fahrzeugendes und den Signaturinformationen; und
Speichern des Seed-Schlüssels, wenn die Verifizierung erfolgreich ist.

8. Ende-zu-Ende-Datenübertragungsverfahren nach Anspruch 7, **dadurch gekennzeichnet, dass** das Verfahren ferner Folgendes umfasst:
während einer Sitzung mit dem Fahrzeugende, Erhalten zumindest eines Stückes von Kennzeicheninformationen entsprechend den Sitzungsdaten;
Erzeugen eines abgeleiteten Schlüssels einer vorbestimmten Länge basierend auf dem zumindest einen Stück von Kennzeicheninformationen und dem Seed-Schlüssel unter Verwendung eines Schlüsselableitungsalgorithmus;
Extrahieren eines abgeleiteten Zielschlüssels entsprechend den Sitzungsdaten aus dem abgeleiteten Schlüssel der vorbestimmten Länge;
Verarbeiten der Sitzungsdaten mit dem abgeleiteten Zielschlüssel zum Erhalten von Zieldaten; und
Antworten auf die Zieldaten oder Senden der Zieldaten an das Fahrzeugende.

9. Ende-zu-Ende-Datenübertragungsverfahren nach Anspruch 8, **dadurch gekennzeichnet, dass** der abgeleitete Zielschlüssel einen einmaligen Verschlüsselungsschlüssel für symmetrische Verschlüsselung umfasst und wobei das Verfahren ferner Folgendes umfasst:
Verschlüsseln des zumindest einen Stückes von Kennzeicheninformationen zum Erhalten eines ersten verschlüsselten Chiffretexts;
Extrahieren von ersten Zielinformationen aus dem ersten verschlüsselten Chiffretext;
Verschlüsseln der ersten Zielinformationen zum Erhalten eines zweiten verschlüsselten Chiffretexts; und
Extrahieren von zweiten Zielinformationen aus dem zweiten verschlüsselten Chiffretext als einen einmaligen Initialisierungsvektor, wobei der einmalige Initialisierungsvektor und der einmalige Verschlüsselungsschlüssel gemeinsam verwendet werden, um symmetrische Entschlüsselung oder Verschlüsselung auf den Sitzungsdaten durchzuführen.

10. Ende-zu-Ende-Datenübertragungsverfahren nach Anspruch 8, **dadurch gekennzeichnet, dass** das Erzeugen eines abgeleiteten Schlüssels einer vorbestimmten Länge basierend auf dem zumindest einen Stück von Kennzeicheninformationen und dem vorab gespeicherten Seed-Schlüssel unter Verwendung eines Schlüsselableitungsalgorithmus Folgendes umfasst:
wenn es ein Stück von Kennzeicheninformationen gibt, Hashing der Kennzeicheninformationen zum Erhalten eines ersten Hash-Wertes, und Abschneiden des ersten Hash-Wertes zum Erhalten eines abgeschnittenen ersten Hash-Wertes; und Erzeugen des abgeleiteten Schlüssels der vorbestimmten Länge basierend auf dem Seed-Schlüssel und dem abgeschnittenen ersten Hash-Wert unter Verwendung des Schlüsselableitungsalgorithmus; oder
wenn es mindestens zwei Stücke von Kennzeicheninformationen gibt, Verketten aller Stücke von Kennzeicheninformationen zum Erhalten von zweiten verketteten Informationen, Hashing der zweiten verketteten Informationen zum Erhalten eines zweiten Hash-Wertes, und Abschneiden des zweiten Hash-Wertes zum Erhalten eines abgeschnittenen zweiten Hash-Wertes; und
Erzeugen des abgeleiteten Schlüssels der vorbestimmten Länge basierend auf dem Seed-Schlüssel und dem abgeschnittenen zweiten Hash-Wert unter Verwendung des Schlüsselableitungsalgorithmus.

11. Ende-zu-Ende-Datenübertragungsverfahren, **dadurch gekennzeichnet, dass** das Verfahren durch ein Datenübertragungssystem, umfassend ein Fahrzeugende und ein mobiles Ende, durchgeführt wird und dass das Verfahren Folgendes umfasst:
Erzeugen, durch das Fahrzeugende, eines Seed-Schlüssels und von Signaturinformationen für den Seed-Schlüssel und dann Verketten der Signaturinformationen, des Seed-Schlüssels und aktueller Zeitstempelinformationen zum Erhalten von ersten verketteten Informationen;
Verschlüsseln der ersten verketteten Informationen basierend auf einer vom Benutzer bereitgestellten mobilen Endkennung zum Erhalten eines verschlüsselten Seed-Schlüssels; und Erzeugen eines Identifizierungscodes entsprechend dem verschlüsselten Seed-Schlüssel; und
Abtasten, durch das mobile Ende, des Identifizierungscodes, der dem verschlüsselten Seed-Schlüssel entspricht und der durch das Fahrzeugende erzeugt wird, zum Erhalten des verschlüsselten Seed-Schlüssels; Verarbeiten des verschlüsselten Seed-Schlüssels mit der mobilen Endkennung zum Erhalten der ersten verketteten Informationen entsprechend dem Seed-Schlüssel; Extrahieren der Signaturinformationen und des Seed-Schlüssels aus den ersten verketteten Informationen; Verifizieren des Seed-Schlüssels basierend auf einer Vorrichtungskennung des Fahrzeugendes und den Signaturinformationen; und
Speichern des Seed-Schlüssels, wenn die Verifizierung erfolgreich ist.

12. Ende-zu-Ende-Datenübertragungsvorrichtung,
umfassend einen Prozessor und eine Speichereinrichtung, ausgelegt zum Speichern von mehreren Stücken von Programmcode, **dadurch gekennzeichnet, dass** der Programmcode dazu ausgelegt ist, durch den Prozessor geladen und ausgeführt zu werden, um das Ende-zu-Ende-Datenübertragungsverfahren nach einem der Ansprüche 1 bis 11 durchzuführen.

13. Computerlesbares Speichermedium, das mehrere Stücke Programmcode speichert, **dadurch gekennzeichnet, dass** der Programmcode dazu ausgelegt ist, durch einen Prozessor geladen und ausgeführt zu werden, um das Ende-zu-Ende-Datenübertragungsverfahren nach einem der Ansprüche 1 bis 11 durchzuführen.

## Revendications

1. Procédé de transmission de données de bout en bout, exécuté par un terminal de véhicule, et comprenant :
la génération (101) d'une clé initiale, et d'informations de signature pour la clé initiale ;
la concaténation (102) des informations de signature, de la clé initiale et d'informations d'horodatage courant pour obtenir des premières informations concaténées ;
le chiffrement (103) des premières informations concaténées sur la base d'un identifiant de terminal mobile fourni par un utilisateur pour obtenir une clé initiale chiffrée ; et
la génération (104) d'un code d'identification correspondant à la clé initiale chiffrée de telle sorte qu'un terminal mobile balaye le code d'identification puis traite la clé initiale chiffrée avec l'identifiant de terminal mobile pour obtenir la clé initiale.

2. Procédé de transmission de données de bout en bout selon la revendication 1, **caractérisé en ce que** la génération d'une clé initiale et d'informations de signature pour la clé initiale comprend :
la génération de la clé initiale sur la base d'une clé maître du terminal de véhicule, d'un identifiant de dispositif du terminal de véhicule, d'informations de contexte prédéterminées, et d'informations aléatoires au moyen d'un algorithme de dérivation de clé ; et la génération des informations de signature sur la base de l'identifiant de dispositif du terminal de véhicule.

3. Procédé de transmission de données de bout en bout selon la revendication 1, **caractérisé en ce que**, après la génération d'une clé initiale et d'informations de signature pour la clé initiale, le procédé comprend en outre :
pendant une session avec le terminal mobile, l'obtention d'au moins un élément d'informations d'étiquette correspondant à des données de session ;
la génération d'une clé dérivée d'une longueur prédéterminée sur la base du ou des éléments d'informations d'étiquette et de la clé initiale au moyen d'un algorithme de dérivation de clé ;
l'extraction d'une clé dérivée cible correspondant aux données de session de la clé dérivée de la longueur prédéterminée ;
le traitement des données de session avec la clé dérivée cible pour obtenir des données cibles ; et
la réponse aux données cibles, ou l'envoi des données cibles au terminal mobile.

4. Procédé de transmission de données de bout en bout selon la revendication 3, **caractérisé en ce que** la clé dérivée cible comprend une clé de chiffrement à usage unique pour un chiffrement symétrique, et le procédé comprend en outre :
le chiffrement du ou des éléments d'informations d'étiquette pour obtenir un premier cryptogramme chiffré ;
l'extraction de premières informations cibles du premier cryptogramme chiffré ;
le chiffrement des premières informations cibles pour obtenir un second cryptogramme chiffré ; et
l'extraction de secondes informations cibles du second cryptogramme chiffré en tant que vecteur d'initialisation à usage unique, dans lequel le vecteur d'initialisation à usage unique et la clé de chiffrement à usage unique sont utilisés conjointement pour effectuer un chiffrement ou un déchiffrement symétrique sur les données de session.

5. Procédé de transmission de données de bout en bout selon la revendication 3, **caractérisé en ce que** la génération d'une clé dérivée d'une longueur prédéterminée sur la base du ou des éléments d'informations d'étiquette et de la clé initiale préstockée au moyen d'un algorithme de dérivation de clé comprend :
s'il existe un élément d'informations d'étiquette, le hachage des informations d'étiquette pour obtenir une première valeur de hachage, et la troncature de la première valeur de hachage pour obtenir une première valeur de hachage tronquée ; et la génération de la clé dérivée de la longueur prédéterminée sur la base de la clé initiale et de la première valeur de hachage tronquée au moyen de l'algorithme de dérivation de clé ; ou
s'il existe au moins deux éléments d'informations d'étiquette, la concaténation de tous les éléments d'informations d'étiquette pour obtenir des secondes informations concaténées, le hachage des secondes informations concaténées pour obtenir une seconde valeur de hachage, et la troncature de la seconde valeur de hachage pour obtenir une seconde valeur de hachage tronquée, et la génération de la clé dérivée de la longueur prédéterminée sur la base de la clé initiale et de la seconde valeur de hachage tronquée au moyen de l'algorithme de dérivation de clé.

6. Procédé de transmission de données de bout en bout selon la revendication 1, **caractérisé en ce que** la clé dérivée cible comprend en outre une clé d'authentification à usage unique ; et
la clé d'authentification à usage unique est utilisée pour signer ou vérifier les données à traiter.

7. Procédé de transmission de données de bout en bout, **caractérisé en ce que** le procédé est exécuté par un terminal mobile, et le procédé comprend :
le balayage d'un code d'identification qui correspond à une clé initiale chiffrée et qui est généré par un terminal de véhicule pour obtenir la clé initiale chiffrée ;
le traitement de la clé initiale chiffrée avec un identifiant de terminal mobile pour obtenir des premières informations concaténées correspondant à la clé initiale ;
l'extraction d'informations de signature et d'une clé initiale des premières informations concaténées ;
la vérification de la clé initiale sur la base d'un identifiant de dispositif du terminal de véhicule, et des informations de signature ; et
le stockage de la clé initiale lorsque la vérification est réussie.

8. Procédé de transmission de données de bout en bout selon la revendication 7, **caractérisé en ce que** le procédé comprend en outre :
pendant une session avec le terminal de véhicule, l'obtention d'au moins un élément d'informations d'étiquette correspondant à des données de session ;
la génération d'une clé dérivée d'une longueur prédéterminée sur la base du ou des éléments d'informations d'étiquette et de la clé initiale au moyen d'un algorithme de dérivation de clé ;
l'extraction d'une clé dérivée cible correspondant aux données de session de la clé dérivée de la longueur prédéterminée ;
le traitement des données de session avec la clé dérivée cible pour obtenir des données cibles ; et
la réponse aux données cibles, ou l'envoi des données cibles au terminal de véhicule.

9. Procédé de transmission de données de bout en bout selon la revendication 8, **caractérisé en ce que** la clé dérivée cible comprend une clé de chiffrement à usage unique pour un chiffrement symétrique, et le procédé comprend en outre :
le chiffrement du ou des éléments d'informations d'étiquette pour obtenir un premier cryptogramme chiffré ;
l'extraction de premières informations cibles du premier cryptogramme chiffré ;
le chiffrement des premières informations cibles pour obtenir un second cryptogramme chiffré ; et
l'extraction de secondes informations cibles du second cryptogramme chiffré en tant que vecteur d'initialisation à usage unique, dans lequel le vecteur d'initialisation à usage unique et la clé de chiffrement à usage unique sont utilisés conjointement pour effectuer un chiffrement ou un déchiffrement symétrique sur les données de session.

10. Procédé de transmission de données de bout en bout selon la revendication 8, **caractérisé en ce que** la génération d'une clé dérivée d'une longueur prédéterminée sur la base du ou des éléments d'informations d'étiquette et de la clé initiale préstockée au moyen d'un algorithme de dérivation de clé comprend :
s'il existe un élément d'informations d'étiquette, le hachage des informations d'étiquette pour obtenir une première valeur de hachage, et la troncature de la première valeur de hachage pour obtenir une première valeur de hachage tronquée ; et la génération de la clé dérivée de la longueur prédéterminée sur la base de la clé initiale et de la première valeur de hachage tronquée au moyen de l'algorithme de dérivation de clé ; ou
s'il existe au moins deux éléments d'informations d'étiquette, la concaténation de tous les éléments d'informations d'étiquette pour obtenir des secondes informations concaténées, le hachage des secondes informations concaténées pour obtenir une seconde valeur de hachage, et la troncature de la seconde valeur de hachage pour obtenir une seconde valeur de hachage tronquée, et la génération de la clé dérivée de la longueur prédéterminée sur la base de la clé initiale et de la seconde valeur de hachage tronquée au moyen de l'algorithme de dérivation de clé.

11. Procédé de transmission de données de bout en bout, **caractérisé en ce que** le procédé est exécuté par un système de transmission de données comprenant un terminal de véhicule et un terminal mobile, et le procédé comprend :
la génération d'une clé initiale, et d'informations de signature pour la clé initiale ; la concaténation des informations de signature, de la clé initiale et d'informations d'horodatage courant pour obtenir des premières informations concaténées ; le chiffrement des premières informations concaténées sur la base d'un identifiant de terminal mobile fourni par un utilisateur pour obtenir une clé initiale chiffrée ; et la génération d'un code d'identification correspondant à la clé initiale chiffrée ; et
le balayage, par le terminal mobile, du code d'identification qui correspond à une clé initiale chiffrée et qui est généré par le terminal de véhicule pour obtenir la clé initiale chiffrée ; le traitement de la clé initiale chiffrée avec l'identifiant de terminal mobile pour obtenir les premières informations concaténées correspondant à la clé initiale ;
l'extraction des informations de signature et de la clé initiale des premières informations concaténées ; la vérification de la clé initiale sur la base d'un identifiant de dispositif du terminal de véhicule, et des informations de signature ; et le stockage de la clé initiale lorsque la vérification est réussie.

12. Dispositif de transmission de bout en bout, comprenant un processeur et un appareil de stockage configuré pour stocker une pluralité d'éléments de code de programme, **caractérisé en ce que** le code de programme est configuré pour être chargé et exécuté par le processeur pour exécuter le procédé de transmission de données de bout en bout selon l'une quelconque des revendications 1 à 11.

13. Support de stockage lisible par ordinateur stockant une pluralité d'éléments de code de programme, **caractérisé en ce que** le code de programme est configuré pour être chargé et exécuté par un processeur pour exécuter le procédé de transmission de données de bout en bout selon l'une quelconque des revendications 1 à 11.
